# EUROPEAN PATENT APPLICATION

(11) **EP 1 333 637 A1**
(43) Date of publication of application: **06.08.2003**
(21) Application number: 02075444.6
(22) Date of filing: 31.01.2002
(51) Int. Cl.: H04L 29/06

(54) **Telecommunication method and system**

(71) Applicant: Koninklijke KPN N.V., 9726 AE Groningen (NL)
(72) Inventor: van der Werff, Martin Remco, 9741 PE Groningen (NL); Vonder, Matthijs Raymond, 9731 LW Groningen (NL); van der, Waaij, Bram Dirk, 9728 TG Groningen (NL)
(74) Representative: Prins, Adrianus Willem

(57) **Abstract**

Data/voice chatting, wherein a first user (1) exchanges text information with a second user (2) via a chat server (6a). The first user requests via the chat server a telephone connection with the second user. The chat server transmits a request to the second user and the second user transmits a respons. If the respons code is positive, a telephone subserver (13) establishes the requested telephone connection. In a prior step, each user may register his/her telephone number in the chat server or telephone server. Alternatively, the second user may enter her/his telephone number which is registered with an ID code linked to it, which ID code is transmitted to the first user. The first user makes a telephone call and transmits the value of said ID code to the telephone server. The value of the received ID code is matched with the registered ID codes, after which the telephone server establishes the requested connection between the first user's and the second user's telephone terminals (9,10).

## Description

### Field of the Invention

The invention generally relates to telecommunications in which two or more users communicate with each other e.g. by means of so-called "chat" services etc.

### Background of the Invention

Chatting e.g. via internet has become a popular pastime. Via data-oriented terminals like PC's, users are able to communicate with another. Chatting between two users is possible or between a larger group. In many cases it is preferred to chat anonymously, e.g. by means of "avatars", nicknames etc.

There may be a need or desire to change, at a certain moment, from data-oriented to voice-oriented chatting: switching-over from typing/reading via data-oriented communication means, to talking/listening via voice-oriented communication means, while, preferably, the users don't lose their anonymity.

### Summary of the Invention

The present invention presents a method for telecommunication, wherein a first user exchanges information in a first, e.g. data-oriented format, with a second user via a first connection under control of an exchange, e.g. data-chat server.

An aim of the invention is to enable to users already chatting via a first, e.g. data-formatted connection, an opportunity to expand their conversation with, or to switch-over to voice-formatted conversation via a second connection, however, without giving up their anonymity, one of the "basics" of modern electronic chatting. To that end following steps may be executed:

The first user transmits a first request code to the exchange server, requesting a second connection between the first user and the second user for exchanging information in a second format. The first request code may be transmitted by means of activating a "Request_Voice_Chat"-button on the chat client's interface screen. On reception of the first request code, the exchange server transmits a second request code to the second user, asking permission to establish said requested second connection. The request may be displayed on the second user's chat client screen and the second user may transmit a response code to the server, comprising a permission or a refusal to establish the requested second connection.

If the response code comprises the second user's permission to establish the requested second connection, the exchange server establishes the requested second connection between the first user and the second user, which second connection is fit for exchanging information in the second format, viz. voice format.

There may be used two preferred options for enabling the establishment of the requested second (voice) connection.

According to the first option, prior to any chat expansion or switch-over action, depicted above, each chat user, making use of the present extended chat service, may register his/her voice network address (e.g. telephone number) to be used in setting up the second (e.g. telephone) connection to him/her. In this preferred option, the exchange server, receiving a "voice chat request" from the first user, as well as an positive response ("voice chat permit") from the second user, establishes a connection between the first user's voice address (voice network address) and the second user's voice address, both of them being registered and accessible by the exchange server.

According to the second option, neither the first user's nor the second user's (voice) address is previously registered. In this second option, the second user, after reception of the request code asking permission to establish the requested second connection, enters, as a permission to establish the requested second connection, his/her address (e.g. telephone number), valid for setting up the requested second (e.g. telephone) connection. The exchange server, after reception of the address entered by the second user, registers that address, assigning an ID code to it. The server does not transmit the second user's telephone address, but, for the sake of second user's anonymity, transmits said ID code to the first user. After reception of the ID code in text format the first user may transmit second user's ID code, received from the exchange server, back to the exchange server, however by e.g. telephone.

The exchange server then establishes the desired second connection, to the address which matches with the ID code entered by the first user.

Although use could be made by one exchange server which is fit for establishing connections between users in e.g. text format, like conventional text based chatting, as well as for establishing connections between users in e.g. voice format, like e.g. IP based telephone connections, it might be preferred to split up the exchange server into a first subserver, dedicated to text chat services and a second subserver, dedicated to (e.g. conventional) telephone services. The first subserver may be connected to the internet, for establishing text chatting via internet, while the second subserver may be connected to a telephone network like a PSTN or ISDN network. Both subservers are interconnected, e.g. via the internet, to be able to exchange service data like the second user's destination address (telephone number) and/or the ID code to be linked to that destination address. So in this case, during a text based chat session between two users, established via the internet under control of the first subserver, the chat server, the first user may request expansion of the chat session or switching over from the chat session to "voice" chatting via the telephone network. To that end the first user may send his/her "Request_Voice_Chat" code to the internet chat subserver, which contacts the second user, requesting permission to do so. If the second users permits, the first subserver activates the second subserver to prepare a connection between the first and the second user via the telephone network.

One option is that the second subserver uses the various users' pre-registered telephone numbers, while in the second option the second user enters his/her telephone number, which is linked to an ID code. The ID code is sent to first user's chat terminal while the first user enters the received ID code into the second subserver by means of the first user's telephone device. After matching the entered ID code, the second subserver makes the requested telephone connection with the second user, calling second user's number, linked with the matching ID code.

The original text based chat session may or may not be continued meanwhile.

Yet in another way of achieving the aim of the invention, the following steps may be executed: the first user transmits a request message or code to the second user while keeping his anonymity. The first user also transmits the same, or preferably another request code to the exchange server. The exchange server recognizes from the received request code whether or not the request authentically originates from the first user. The second user may then forward a response code to the exchange server whereby indicating refusal or approval for the request while at the same time forwarding the authentication code of the second user. After verification of the authentication codes of the first and second server, the exchange server can confirm a "safe message" to the first and second user whereafter the second connection can be made.

### Figures

Figure 1 shows a first exemplary implementation of the invention comprising a common exchange server.
Figure 2 shows a second exemplary implementation of the invention comprising two subservers, distributed over the internet and the telephone network, replacing the common exchange server in figure 1.

### Exemplary embodiment

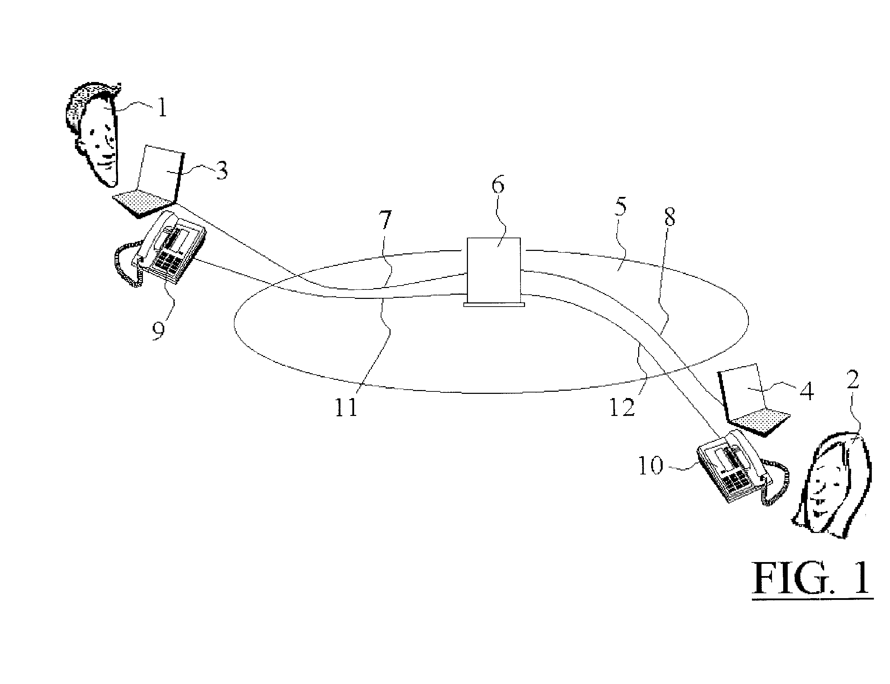

Figure 1 illustrates how a text based chat session between a first user 1 and a second user 2 is established by means of of the users' data terminals 3 and 4 respectively, via an IP connection via the internet 5, under control of a exchange server (chat server) 6.

At a certain moment, user 1 may desire to set up -in stead of or additional to the existing text based connection/session- a telephone chat session with user 2. To that end, first user 1 transmits, via connection 7, a first request code to the exchange server 6, requesting a second connection between the first user 1 and the second user 2 for exchanging information in a second format, viz. Voice Over IP (VOIP) format, each user using a VOIP enabled terminal 9 and 10 respectively. The first request code may be transmitted by means of "pushing" a "Request Voice Chat"-button on the interface screen of data terminal 3. On reception of the first request code, the exchange server 6 transmits, via a connection 8 a second request code to the second user's data terminal 4, asking user 2 permission to establish a VOIP session between the VOIP terminals 9 and 10. The request is displayed on the second user's data terminal 4. The second user 2 transmits a respons code to the server via connection 8, comprising permission or refusal to establish the requested VOIP connection. If the respons code comprises the second user's permission to establish the requested second connection, the exchange server 6 establishes the requested VOIP connection. The second, VOIP connection, comprises a first VOIP connection 11 between user 1 and the server 6 and a second VOIP connection 12.

There are two preferred options for enabling the establishment of the requested second (voice) connection:

According to the first option, in a prior, user registration step, each user registers an address which is valid for establishing the VOIP connection; each relevant user's VOIP address (e.g. URL) may be stored within exchange server 6. The exchange server 6, receiving a "voice chat request" from the first user 1, as well as an positive respons ("voice chat permit") from the second user 2 establishes a VOIP connection between the address of first user's VOIP terminal 9 and the address of second user's VOIP terminal 10, both addresses being registered and used, by the exchange server 6, for making the VOIP connections 11 and 12, thus establishing a "voice chat session" between users 1 and 2.

According to the second option, neither the first user's nor the second user's VOIP terminal address is previously registered in exchange server 6. According to this second option, the second user 2, after reception of the request code asking permission to establish the requested second (VOIP) connection, enters, as a permission to establish the requested second connection, the address of VOIP terminal 10, valid for establishing the second connection. The exchange server, after reception of the address of terminal 10, entered by the second user 2, stores that address, and links an ID code to it. Next, server 6 does not transmit second user's VOIP terminal address, but, for the sake of second user's anonymity, instead transmits the ID code to the dataterminal 3 of user 1.

Next, user 1 may make a call, by means of VOIP terminal 9, to server 6, via connection 11. A Voice Respons interface (VRI) of server 6 may invite user 1 to enter the value of the ID code received before from server 6 via data terminal 3. The server 6 searches within the stored ID codes for an ID code which matches with the ID code received from VOIP terminal 9, reads the VOIP address linked with that matching ID code and establishes a connection 12 between with the VOIP terminal 10, addressed by the address linked with the matching ID code. By switching through connection 11 between VOIP terminal 9 and server 6, initiated by user 1, and connection 12 between server 6 and VOIP terminal 10, initiated, after the matching process by server 6, the desired VOIP connection between terminal 9 and terminal 10 is established, enabling a voice chat session, by means of VOIP terminals 9 and 10, as a continuation of the earlier data chat session by means of data terminals 3 and 4. It is noted that it is not possible for user 1 to learn the VOIP address of user 2 because in both options the address of VOIP terminal 10 is protected by server 6.

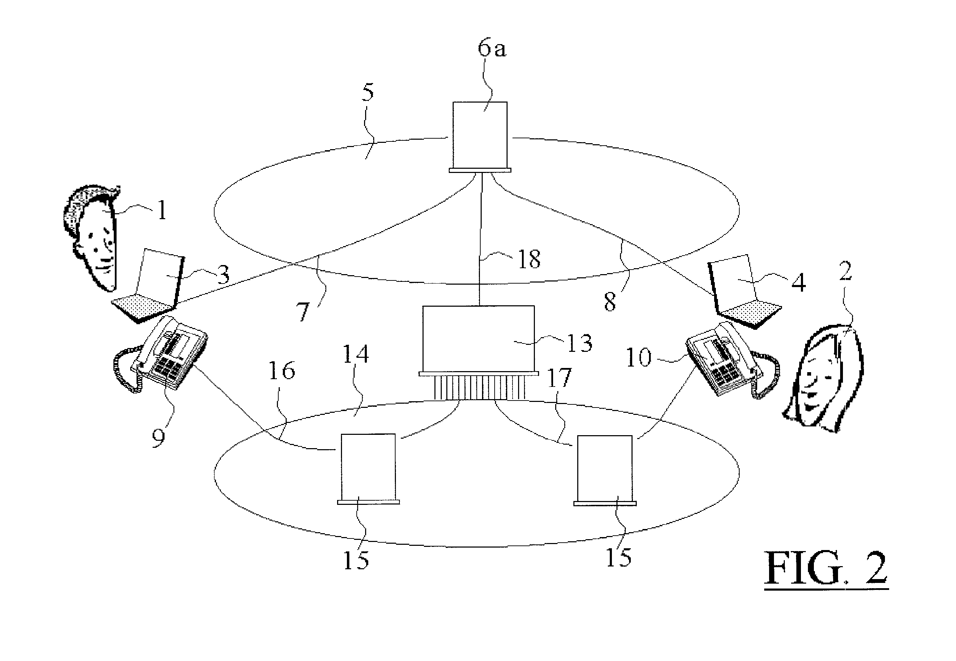

Figure 2 shows an embodiment in which the exchange server comprises two cooperating subservers, viz. a first subserver 6a, a "text chat server", controlling an (IP based) first connection, consisting in connections 7 and 8, and a second subserver 13, a "telephone connect server", controlling a second connection, consisting in a telephone connection 16 and a telephone connection 17.

First user 1 transmits, via IP connection 7, a first request code to the first subserver 6a, requesting a second connection, between the first user 1 and the second user 2 for exchanging information in a second format, viz. by telephone, to be established by the second subserver 13 and a telephone network 14, for instance the conventional Public Switched Telephone Network (PSTN), including network switches 15. Subserver 6a transmits a second request code to the second user, asking permission to establish the requested second connection to the first user 1 via the PSTN 14.

The second user 2 transmits a respons code to the first subserver 6a. If the respons code comprises a permission to establish the requested second connection, the first subserver 6a transmits, via a connection 18, a command to the second subserver 13 to establish the requested second connection between the first user and the second user fit for exchanging information in the second format. The command to the second subserver 13 has to comprise address information about the first and the second user, which information is to be used by the second subserver 13 to establish a connection, via the PSTN 14, between the first user's PSTN address (telephone number) and second user's PSTN address.

In one embodiment, in a prior step, each user may register in the first subserver 6a the PSTN address (telephone number) valid for establishing the second telephone connection between the telephone terminals 9 and 10, under control of the second subserver 13.

In an alternative embodiment, the second user 2 may, after reception from the first subserver 6a, of the request code asking permission to establish the requested second connection via the PSTN 14, enter, as a permission to establish the requested second connection, the PSTN telephone number of second user's telephone terminal 10.

After reception of the telephone number entered by the second user 2, the first subserver 6a registers that telephone number, including an ID code linked to it. The first subserver 6a then transmits the ID code to the first user 1 via the first connection 7. After reception of the ID code, the first user 1 calls, with his/her telephone terminal 9, the second subserver 13 via the PSTN 14 and transmits, guided by a VRI session executed by the second subserver 13, the value of the ID code as displayed at the screen of terminal 3, to second subserver 13. Second subserver 13 transmits the received ID code to first subserver 6a which matches the value of the received ID code with the stored ID codes and transmits back to second subserver 13 the telephone number which is linked to the matching ID code. Finally, second subserver 13 establishes the requested connection 16-17 by switching through connection 16, initiated by first user 1 with terminal 9, with connection 17 between subserver 13 and second user's telephone terminal 10, using the telephone number transmitted by first subserver 6a after the ID code matching process.

Instead of registering, in the last embodiment, the users' telephone numbers and their ID codes within the first subserver 6a, those telephone numbers and linked ID code might be registered in the second subserver 13, in which also the matching process might be executed then. In this case, first subserver 6a, after reception of the telephone number, entered by second user 2 via terminal 4, transmits that telephone number to second subserver 13, which registers the telephone number, linking an ID code to it. Then second subserver 13 copies the linked ID code to the first subserver 6a, which transmits it to first user's terminal 3. After reception of the ID code from the first subserver, first user 1 transmits, during a VR guided communication with subserver 13, the value of said ID code to second subserver 13, using his/her telephone terminal 9. Finally, the second subserver 13 matches the value of the received ID code with the value of the registered ID codes and establishes the requested second connection, using second user's telephone number, linked with the matching ID code.

## Claims

1. Method for telecommunication, wherein a first user (1) exchanges information in a first format with a second user (2) via a first connection (7,8) under control of an exchange server (6), comprising next steps:
a. the first user transmits a first request code to the exchange server, requesting a second connection (11,12) between the first user and the second user for exchanging information in a second format;
b. the exchange server transmits a second request code to the second user, asking permission to establish said requested second connection;
c. the second user transmits a respons code to the server, comprising a permission or a refusal to establish the requested second connection;
d. if the respons code comprises the permission to establish the requested second connection, the exchange server establishes the requested second connection between the first user and the second user fit for exchanging information in the second format.

2. Method according to claim 1, comprising that, in a prior step, each user registers an address which is valid for establishing said second connection.

3. Method according to claim 1, comprising that the second user, after reception of the second request code, asking permission to establish the requested second connection, enters, as a permission to establish the requested second connection, an address which is valid for establishing said second connection.

4. Method according to claim 3, comprising the steps that
a. the exchange server, after reception of the address entered by the second user, registers that address, assigning an ID code to it;
b. the exchange server transmits said ID code to the first user;
c. after reception of the ID code, the first user transmits said ID code to the exchange server;
d. the exchange server establishes the second connection, the connection being addressed by the address matching with the ID code entered by the first user.

5. Method according to claim 1, comprising that said first format is text related, while said second format is voice related.

6. Method according to claim 1, comprising that said exchange server comprises a first subserver (6a), controlling the first connection (7,8), as well as a second subserver (13), controlling the second connection (16,17), whereas, according to the above steps,
a. the first user transmits the first request code to the first subserver, requesting said second connection between the first user and the second user for exchanging information in a second format;
b. the first subserver transmits said second request code to the second user, asking permission to establish said second connection;
c. the second user transmits the respons code to the first subserver;
d. if the respons code comprises a permission to establish the requested second connection, the second subserver establishes the requested second connection between the first user and the second user fit for exchanging information in the second format.

7. Method according to claim 6, comprising that, in a prior step, each user registers an address in the first subserver, which address is valid for establishing said second connection.

8. Method according to claim 6, comprising that the second user, after reception from the first subserver, of the second request code, asking permission to establish the requested second connection, enters, as a permission to establish the requested second connection, an address which is valid for establishing said second connection.

9. Method according to claim 8, comprising the steps that
a. after reception, by the first subserver, of the address entered by the second user, the first subserver registers that address, including an ID code linked to it;
b. the first subserver transmits said ID code to the first user via the first connection;
c. after reception of the ID code from the first subserver, the first user transmits the value of said ID code to the second subserver;
d. the second subserver transmits the received ID code to the first subserver;
e. the first subserver matches the value of the received ID code with the value of the registered ID codes and transmits the address linked with the matching ID code to the second subserver;
f. the second subserver establishes the requested second connection, using the address linked with the matching ID code, received from the first subserver.

10. Method according to claim 8, comprising the steps that
a. after reception, by the first subserver, of the address entered by the second user, the first subserver transmits that address to the second subserver, which registers the address, including an ID code linked to it;
b. the second subserver copies said ID code to the first subserver, which transmits it to the first user via the first connection;
c. after reception of the ID code from the first subserver, the first user transmits the value of said ID code to the second subserver;
d. the second subserver matches the value of the received ID code with the value of the registered ID codes and establishes the requested second connection, using the address linked with the matching ID code.
